# NEUE EUROPÄISCHE PATENTSCHRIFT

(11) **EP 3 261 957 B2**
(45) Veröffentlichungstag und Bekanntmachung des Hinweises auf die Entscheidung über den Einspruch: **12.10.2022**
(45) Hinweis auf die Patenterteilung: 10.04.2019
(21) Anmeldenummer: 16705782.7
(22) Anmeldetag: 22.02.2016
(51) Int. Cl.: B65D 85/804

(54) **PORTIONSKAPSEL MIT EINEM DURCH SIEGELN VERBUNDENEN FILTERELEMENT**
CAPSULE WITH A SEALED FILTER ELEMENT
CAPSULE AVEC A FILTRE SCELLÉ

(30) Priorität: 27.02.2015 DE 102015203585
(43) Veröffentlichungstag der Anmeldung: 03.01.2018
(73) Patentinhaber: K-fee System GmbH, 51469 Bergisch Gladbach (DE)
(72) Erfinder: EMPL, Günter, 51429 Bergisch Gladbach (DE); THROM, Andre, 51103 Köln (DE); HANISCH,Marco, 51491 Overath (DE)
(74) Vertreter: Loock, Jan Pieter
(86) Internationale Anmeldenummer: PCT/EP2016/053684
(87) Internationale Veröffentlichungsnummer: WO 2016/135105

(56) Entgegenhaltungen:
- EP-A1- 1 710 173
- EP-A1- 1 792 850
- WO-A1-2012/038063
- WO-A1-2013/189923
- WO-A1-2014/049143
- WO-A1-2014/090567
- DE-A1-102012 110 446
- GB-A- 1 402 799

## Beschreibung

### Stand der Technik

Die vorliegende Erfindung betrifft eine Portionskapsel für die Herstellung eines Getränks mit einer Seitenwand und einem Boden, die gemeinsam einen Raum definieren, wobei innerhalb des Raums ein Filterelement an den Boden gesiegelt ist.

Derartige Portionskapseln sind aus dem Stand der Technik bekannt und werden beispielsweise zur Herstellung von Kaffee oder Tee oder kaffeeartigen Getränken wie Espresso eingesetzt. Beispielsweise sind in den Druckschiften WO 2012/038063 A1, WO 2014/090567 A1, WO 2013/189923 A1, EP 1 792 850 B1, EP 1 344 722 A1 und US 2003/0172813 A1 Portionskapseln zur Kaffee- und Espressozubereitung offenbart. Die Portionskapseln sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine Seitenwand mit einem umlaufenden Flansch, eine offene Einfüllseite für ein zur Getränkeherstellung zu extrahierendes und/oder aufzulösendes Getränkesubstrat und einen Kapselboden, wobei zwischen dem Getränkesubstrat und dem Kapselboden ein sich gegen den Kapselboden abstützendes Filterelement angeordnet ist. Nach dem Einführen und Siegeln des Filterelements an den Portionskapselboden und dem Einfüllen des Getränkesubstrates wird die Portionskapsel mit einer Deckelfolie verschlossen, die beispielsweise auf den Flansch aufgesiegelt oder aufgeklebt wird. Für die Zubereitung eines Kaffeegetränkes wird die Portionskapsel in eine Brühkammer eines Zubereitungsgerätes eingebracht. Vor, nach oder während des Einführens der Portionskapsel in die Brühkammer wird die Portionskapsel bevorzugt auf ihrer Bodenseite geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat. Für die Zubereitung eines Espresso wirkt zum Extrahieren der ätherischen Öle beispielsweise ein Brühwasserdruck von bis zu 20 bar auf das Kaffeepulver.

Die Druckschrift DE 10 2012 109 186 A1 offenbart ferner eine Portionskapsel, welche ein Filterelement aufweist, das mit Hilfe einer kreisringförmigen Siegelnaht an den Boden der Portionskapsel gesiegelt ist, wobei der innere Durchmesser der Siegelnaht 67 - 77 % des Durchmessers des Filterelements und der äußere Durchmesser der Siegelnaht 84 - 94 % des Durchmessers des Filterelements beträgt, um die Schaumbildung an der Oberfläche des hergestellten Getränks zu reduzieren.

Eine gattungsgemäße Portionskapsel ist ferner aus der GB 1 402 799 A bekannt.

Nachteilig an dieser Lösung ist, dass die Siegelnaht vergleichsweise nah am äußeren Rand des Filterelements liegt und somit bei der Herstellung der Portionskapsel eine präzise Positionierung des Filterelements relativ zum Siegelwerkzeug erforderlich ist.

### Offenbarung der Erfindung

Es war deshalb die Aufgabe der vorliegenden Erfindung, eine Portionskapsel zur Verfügung zu stellen, die die Nachteile des Standes der Technik nicht aufweist und insbesondere einfacher und kostengünstiger herstellbar ist.

Gelöst wird die Aufgabe mit einer Portionskapsel gemäß Anspruch 1.

Die erfindungsgemäße Portionskapsel hat gegenüber dem Stand der Technik den Vorteil, dass äußere Durchmesser der Siegelnaht vergleichsweise stark vom äußeren Rand des Filterelements beabstandet ist, so dass bei der Herstellung der Portionskapsel keine präzise Positionierung des Filterelements relativ zum Siegelwerkzeug notwendig ist. Gleichzeitig wurde überraschenderweise gefunden, dass die hiermit einhergehende Verringerung der im Zentrum des auf Vlies basierenden Filterelements zur Verfügung stehenden aktiven Filterfläche nicht zu einer Beeinträchtigung bei der Herstellung des Getränks führt. Die erfindungsgemäße Portionskapsel ist somit gegenüber der aus dem Stand der Technik bekannten Portionskapsel einfacher und kostengünstiger herstellbar, ohne dass sich die Getränkequalität verschlechtert. Erfindungsgemäß beträgt der äußere Durchmesser der Siegelnaht 60 bis 70 Prozent des Durchmessers des Filterelements. Die Portionskapsel ist insbesondere mit Getränkerohmaterial befüllt, beispielsweise Instand-Kaffeepulver, gemahlene Röstkaffeebohnen, Teeblattverschnitt, Kakaopulver, Milchpulver und/oder dergleichen. Denkbar wäre auch, dass das Filterelement nicht direkt an den Boden der Portionskapsel, sondern an ein im Inneren der Portionskapsel angeordnetes Trägerelement gesiegelt ist. Das Trägerelement dient dazu, das Filterelement zu tragen und liegt vorzugsweise entweder auf dem Boden auf oder ist vom Boden beabstandet. Das Trägerelement kann beispielsweise ein starres Kunststoff-Spritzgussteil sein.

Das Filterelement ist scheibenförmig vorgesehen und weist vorzugsweise einen kreisförmigen Querschnitt auf. Der Durchmesser des Filterelements umfasst im Sinne der vorliegenden Erfindung insbesondere den maximalen oder mittleren Durchmesser dieses Querschnitts des Filterelements. Die Siegelnaht, die das Filterelement mit dem Boden der Portionskapsel stoffschlüssig verbindet, wird vorzugsweise durch Ultraschallschweißen angebracht. Vorzugsweise ist das Filterelement nach dem Siegeln im Bereich der Siegelnaht flüssigkeitsundurchlässig.

Der innere Durchmesser der Siegelnaht beträgt bevorzugt 45 bis 65 Prozent und besonders bevorzugt 50 bis 60 Prozent des Durchmessers des Filterelements. Es hat sich gezeigt, dass bei einem derartigen inneren Durchmesser der Siegelnaht noch eine ausreichend große aktive Filterfläche im Zentrum des Filterelements zur Verfügung steht, um zügig ein qualitativ hochwertiges Getränk mit der Portionskapsel zu erzeugen. Die Breite der Siegelnaht beträgt sodann vorzugsweise 1 bis 1,5 Millimeter.

In absoluten Werte liegt der Durchmesser des Filterelements bevorzugt zwischen 24 und 36 Millimeter und besonders bevorzugt zwischen 29 und 31 Millimeter.

Das Filterelement bzw. Vliesmaterial umfasst bevorzugt eine Massenbelegung (auch als Grammatur oder Flächengewicht bezeichnet) zwischen 50 und 500 Gramm pro Quadratmeter, besonders bevorzugt zwischen 75 und 250 Gramm pro Quadratmeter und ganz besonders bevorzugt von im Wesentlichen 100 Gramm pro Quadratmeter für Portionskapseln zur Herstellung von Tee, Kaffee, Espresso oder dergleichen.

Vorzugsweise wird die Oberfläche des Vliesmaterial behandelt, beispielsweise wärmebehandelt, um beispielsweise lose Fasern zu fixieren. Die Wärmebehandlung erfolgt vorzugsweise lediglich auf einer dem Getränkerohmaterial abgewandten Seite des Filterelements, um die Fasern zu verknoten oder zu verbinden, so dass die Fasern nicht in das Getränk gelangen. Auf der anderen Seite des Filterelements, d.h. auf der dem Getränkerohmaterial zugewandten Seite, ist das Filterelement bevorzugt kalandriert, besonders bevorzugt punktkalandriert. Auf diese Weise wird das Volumen des Vliesmaterials reduziert, so dass innerhalb der Portionskapsel ein größerer Raum für das Getränkerohmaterial zur Verfügung steht. Denkbar wäre aber auch, dass das Filterelement auf beiden Seiten wärmebehandelt ist.

Ein weiterer, nicht erfindungsgemäßer Gegenstand der vorliegenden Offenbarung ist eine Portionskapsel für die Herstellung eines Getränks mit einer Seitenwand und einem Boden, die gemeinsam einen Raum definieren, wobei innerhalb des Raums ein Filterelement mit einer im Wesentlichen kreisringförmigen Siegelnaht an den Boden oder an ein Trägerelement gesiegelt ist, wobei das Filterelement ein Filz umfasst und wobei der äußere Durchmesser der Siegelnaht 75 bis 85 Prozent des maximalen Durchmessers des Filterelements beträgt.

Diese Portionskapsel hat gegenüber dem Stand der Technik - analog zur vorstehend beschriebenen Portionskapsel - wiederrum den Vorteil, dass ihre Herstellung einfacher und kostengünstiger ist. Es hat sich allerdings gezeigt, dass bei der Verwendung eines auf Filzmaterial basierenden Filterelements der äußere Durchmesser der Siegelnaht etwas größer als bei einem auf Vliesmaterial basierenden Filterelements gewählt werden muss, damit die Qualität des hergestellten Getränks nicht beeinträchtig wird. Zudem wird bei diesem Durchmesser vorteilhafterweise ferner eine sehr geringe Schaumbildung auf dem hergestellten Getränk erzielt. Vorzugsweise liegt der äußere Durchmesser der Siegelnaht hierfür bei 80 ± 2 Prozent des maximalen Durchmessers des Filterelements beträgt.

Der innere Durchmesser der Siegelnaht beträgt bevorzugt 66 bis 76 Prozent und besonders bevorzugt 71 ± 2 Prozent des maximalen Durchmessers des Filterelements.

Der Querschnitt des, auf Filzmaterial basierenden Filterelements hat vorzugsweise die Form eines Polygons und insbesondere eines Hexagon. Der maximale Durchmesser wird an den Ecken des Polygons abgenommen. Der maximale Durchmesser des Filterelements liegt im Bereich der Ecken des Polygons bevorzugt zwischen 26 und 37 Millimeter und besonders bevorzugt zwischen 31 und 32 Millimeter. Der minimale Durchmesser des Filterelements liegt im Bereich der Kanten des Polygons bevorzugt zwischen 23 und 35 Millimeter und besonders bevorzugt zwischen 28 und 30 Millimeter. Alternativ wäre aber auch denkbar, dass das auf Filzmaterial basierende Filterelement wie das auf Vliesmaterial basierenden Filterelement mit einem kreisrunden Querschnitt versehen ist.

Vorzugsweise weist das Filterelement eine Filzstruktur auf. Insbesondere handelt es sich dabei um eine Nadelfilzstruktur. Vorzugsweise besteht das Filterelement aus mindestens einer Filzstruktur und einer Trägerstruktur, insbesondere einer Gewebestruktur, wobei besonders bevorzugt die Filzstruktur zumindest einen Teilabschnitt des Volumens der Trägerstruktur ausmacht. Vorzugsweise erstreckt sich die Filzstruktur über den gesamten Querschnitt der Trägerstruktur, besonders bevorzugt aber nur über einen Teilbereich der Höhe. Vorzugsweise ist die Filzstruktur form-, kraft- und/oder stoffschlüssig mit der Trägerstruktur verbunden. Vorzugsweise weist das Filterelement zwei oder mehr Filzstrukturen auf, die durch die Trägerstruktur vorzugsweise voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt.

Vorzugsweise wird die Oberfläche der Filzstruktur behandelt, beispielsweise wärmebehandelt, um beispielsweise lose Fasern zu fixieren. Die Wärmebehandlung erfolgt vorzugsweise lediglich auf einer dem Getränkerohmaterial abgewandten Seite des Filterelements, um die Fasern zu verknoten oder zu verbinden, so dass die Fasern nicht in das Getränk gelangen. Auf der anderen Seite des Filterelements, d.h. auf der dem Getränkerohmaterial zugewandten Seite, ist das Filterelement bevorzugt kalandriert, besonders bevorzugt punktkalandriert. Auf diese Weise wird das Volumen des Filzmaterials reduziert, so dass innerhalb der Portionskapsel ein größerer Raum für das Getränkerohmaterial zur Verfügung steht. Denkbar wäre aber auch, dass das Filterelement auf beiden Seiten wärmebehandelt ist.

Vorzugsweise wird das eine Filzstruktur aufweisende Filterelement lediglich in die Kapsel, insbesondere auf deren Boden, eingelegt. Das Filterelement kann aber auch mit der Kapsel, insbesondere deren Boden, insbesondere stoffschlüssig, verbunden werden. Beim Perforieren kann das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet und ggf. miteinander verbunden.

Ein eine Trägerstruktur, insbesondere eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Filterelement bzw. das Trägerelement aufweisend eine oder mehrere Filzstrukturen umfasst bevorzugt eine Massenbelegung (auch als Grammatur oder Flächengewicht bezeichnet) zwischen 100 und 1500 Gramm pro Quadratmeter, besonders bevorzugt zwischen 650 und 1300 Gramm pro Quadratmeter und ganz besonders bevorzugt von im Wesentlichen 1150 Gramm pro Quadratmeter für Portionskapseln zur Herstellung von Tee, Kaffee, Espresso oder dergleichen.

Bei der Ausführungsform mit einem auf Filzmaterial basierenden Filterelement weist das Filterelement bevorzugt eine Dicke zwischen 0,8 und 3,3 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf. Bei der Ausführungsform mit einem auf Vliesmaterial basierenden Filterelement weist das Filterelement bevorzugt eine Dicke zwischen 0,2 und 0,8 Millimetern, besonders bevorzugt zwischen 0,25 und 0,39 Millimetern, und ganz besonders bevorzugt, von im Wesentlichen 0,32 Millimetern auf.

Die nachfolgend beschriebenen besonders bevorzugten Ausführungsformen beziehen sich sowohl auf die Portionskapsel mit einem auf Vliesmaterial basierenden Filterelement als auch auf die Portionskapseln mit einem auf Filzmaterial basierenden Filterelement.

In einer bevorzugten Ausführungsform beträgt die Breite der Siegelnaht 1 - 1,5 Millimeter.

Vorzugsweise weist der Boden der Portionskapsel einen im Wesentlichen ebenen Abschnitt auf, der kreisförmig gestaltet ist und dessen äußerer Durchmesser 84 - 94 % des Durchmessers des Filterelements beträgt. An den äußeren Umfang des ebenen Abschnitts schließt sich vorzugsweise eine Sicke an, durch die der ebene Abschnitt etwas beabstandet von einer möglichen Auslage angeordnet ist. Die Sicke bildet außerdem den Übergang zwischen dem ebenen Boden und der Seitenwand und verleiht der Portionskapsel Stabilität. Vorzugsweise erstreckt sich das Filterelement bis in den Bereich der Sicke und überdeckt diese zumindest teilweise, ohne sie zu berühren.

Gemäß einer bevorzugten Ausführungsform weist der Boden eine Ausnehmung auf, die so groß ist, dass beim Ausströmen/Durchströmen des Getränks durch diese Ausnehmung im Wesentlichen kein Druckverlust entsteht. Diese Ausnehmung ist vorzugsweise bereits in den Kapselboden eingearbeitet, bevor das Filterelement an den Kapselboden gesiegelt wird. Die Ausnehmung ist vor dem Zubereitungsvorgang vorzugsweise mit einer Folie oder dergleichen verschlossen, die abgezogen oder von einem Aufstechorgan durchstochen werden kann.

Vorzugsweise ist der Durchmesser des Filterelements kleiner, insbesondere 1 - 5 % kleiner, als die Innenabmessung der Portionskapsel in Bodenhöhe. Denkbar wäre aber auch, dass der Durchmesser des Filterelements größer als der Durchmesser des Bodes ist. Der Rand des Filterelements wird dann am Rand des Bodens nach oben geklappt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1a**: zeigt eine schematische Schnittbildansicht einer Portionskapsel nebst Siegelwerkzeugen gemäß einer beispielhaften ersten, nicht erfindungsgemäßen Ausführungsform.
- **Figur 1b**: zeigt eine schematische Aufsichtsdarstellung einer Portionskapsel gemäß der beispielhaften ersten, nicht erfindungsgemäßen Ausführungsform.
- **Figur 2**: zeigt eine schematische Aufsichtsdarstellung einer Portionskapsel gemäß der erfindungsgemäßen Ausführungsform.

### Ausführungsformen der Erfindung

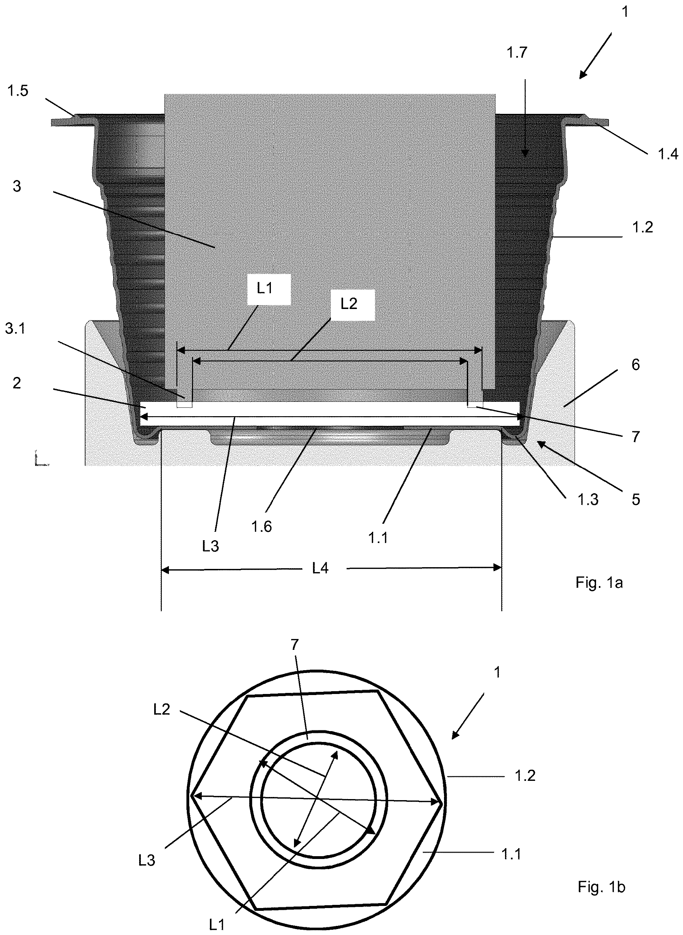

In **Figuren 1a und 1b** ist die Portionskapsel 1 gemäß einer nicht erfindungsgemäßen Ausführungsform, in Figur 1a zusammen mit einem Siegelwerkzeug 3, schematisch illustriert. Die Portionskapsel 1 ist im Wesentlichen kegelstumpfförmig ausgeführt und weist eine umlaufende Seitenwand 1.2 sowie einen Bodenbereich 1.1 auf. Die Seitenwand 1.2 und der Bodenbereich 1.1 spannen einen Raum 1.7 auf, in dem sich ein Filterelement 2 befindet, das in dem vorliegenden Fall eine Filzstruktur aufweist. Das Filterelement 2 wird mittels des Siegelwerkzeugs 3, das an seinem unteren Ende Siegelflächen 3.1 aufweist, an den Boden 1.1 der Portionskapsel 1 unter Ausbildung einer Siegelnaht 7 gesiegelt. Dabei wird die Portionskapsel 1 zumindest teilweise in einem Gegenhalter 6 des Siegelwerkzeugs 3 gehalten. Der Boden 1.1 der Portionskapsel 1 weist einen kreisförmigen ebenen Abschnitt auf, an dessen äußerem Ende sich eine kreisringförmige Sicke 1.3 anschließt, die gleichzeitig den Übergangsbereich 5 zwischen dem Boden 1.1 und der Seitenwand 1.2 darstellt. Durch die Sicke 1.3 ist der ebene Abschnitt des Bodens 1.1 von einer möglichen Auflage, auf der die Sicke aufsteht, beabstandet. In dem ebenen Abschnitt ist eine Ausnehmung 1.6, hier eine kreisförmige Ausnehmung, vorgesehen, die vorzugsweise so groß ist, dass beim Ausströmen des hergestellten Getränkes aus der Portionskapsel 1 kein nennenswerter Druckverlust entsteht und/oder dass das hergestellte Getränk nicht verwirbelt wird. Sobald das Filterelement 2 an den Boden der Portionskapsel 1 gesiegelt ist, insbesondere durch Ultraschall, und das Siegelwerkzeug 3 aus der Portionskapsel 1 entfernt worden ist, wird diese mit einem Getränkesubstrat, beispielsweise mit Teeverschnitt oder Kaffeemehl, befüllt und sodann vorzugsweise mit einer Folie verschlossen, die an den Flansch 1.4, der sich an die Seitenwand kreisringförmig anschließt, gesiegelt oder geklebt wird. Dafür weist der Flansch vorzugsweise eine Ausbuchtung 1.5 auf, die als definierte Siegelfläche dient.

In der nicht erfindungsgemäßen Ausführungsform ist nun vorgesehen, dass die Siegelnaht 7 kreisringförmig vorgesehen ist und dass der äußere Durchmesser der Siegelnaht L1 75 - 85 %, vorzugsweise 80 ± 2 %, hier 79 % des maximalen Durchmessers L3 des Filterelements 2 beträgt. Durch diese Anordnung der Siegelnaht 7 wird bei der Erzeugung des Getränkes, insbesondere bei der Herstellung von Kaffee, kein nennenswerter Schaum erzeugt, und die Portionskapsel 1 ist vergleichsweise einfach und kostengünstig herstellbar. Vorzugsweise beträgt der innere Durchmesser L1 der Siegelnaht 66 - 76 %, besonders bevorzugt 71 ± 2 %, hier 71 %, des maximalen Durchmessers L3 des Filterelements 2. In Figur 1b ist zu erkennen, dass der Querschnitt des Filterelements 2 im vorliegenden Beispiel in Form eines Hexagons mit sechs Ecken und sechs Kanten ausgebildet ist. Mit dem Begriff "maximaler Durchmesser L3 des Filterelements 2" ist hier der Durchmesser im Bereich der Ecken gemeint. Der maximale Durchmesser L3 des Filterelements 2 liegt im Bereich der Ecken des Polygons insbesondere zwischen 26 und 37 Millimeter, vorzugsweise zwischen 31 und 32 Millimeter. Der minimale Durchmesser des Filterelements 2 im Bereich der Kanten des Polygons liegt insbesondere zwischen 23 und 35 Millimeter und vorzugsweise zwischen 28 und 30 Millimeter. Alternativ wäre aber auch denkbar, dass das Filterelement 2 einen kreisrunden Querschnitt, beispielsweise mit einem Durchmesser zwischen 24 und 36 Millimeter und vorzugsweise zwischen 29 und 31 Millimeter aufweist.

Vorzugsweise beträgt die Breite der Siegelnaht 1,5 Millimeter. Beim Schweißen wird zum einen das Filterelement 2 mit dem Kapselboden 1.1 verbunden. Gleichzeitig wird aber auch die Filzstruktur zumindest teilweise zusammengedrückt und vorzugsweise zusammengedrückt fixiert. Querströmungen in der Filzstruktur sind im Bereich der Schweißnaht 7 vorzugsweise zumindest eingeschränkt. Der äußere Durchmesser des Filterelements ist, weiterhin bevorzugt größer vorgesehen als der äußere Durchmesser des ebenen Abschnitts des Filterbodens. Vorzugsweise beträgt der äußere Durchmesser L4 des ebenen Abschnitts des Kapselbodens 84 - 94 %, hier 90 %, des Durchmessers L3 des Filterelements. Das Filterelement 2 ragt folglich in den Bereich der Sicke hinein, ohne den Grund der Sicke zu berühren. Weiterhin bevorzugt ist der äußere Durchmesser L3 des Filterelements kleiner als der Durchmesser der Portionskapsel im Bereich des Bodens. Vorzugsweise wird die Siegelnaht konzentrisch zu der Ausnehmung 1.6 im Kapselboden vorgesehen.

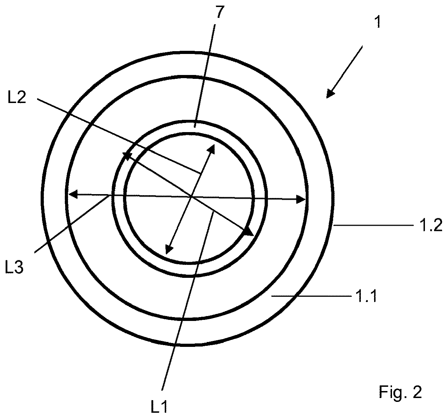

In **Figur 2** ist eine Portionskapsel 1 gemäß einer erfindungsgemäßen Ausführungsform dargestellt. Die Portionskapsel 1 gemäß der erfindungsgemäßen Ausführungsform entspricht im Wesentlichen der Portionskapsel 1 gemäß der ersten, nicht erfindungsgemäßen Ausführungsform (daher wird Bezug genommen auf Figur 1a). Der einzige Unterschied ist, dass das Filterelement 2 bei der Portionskapsel 1 gemäß der erfindungsgemäßen Ausführungsform aus Vlies gefertigt ist und einen kreisrunden Querschnitt aufweist. Zudem ist erfindungsgemäß nun vorgesehen, dass der äußere Durchmesser der Siegelnaht 60 bis 70 %, hier 67 % des maximalen Durchmessers L3 des Filterelements 2 beträgt und der innere Durchmesser L1 der Siegelnaht 45 - 65 %, besonders bevorzugt 50 bis 60 %, hier 58 %, des maximalen Durchmessers L3 des Filterelements 2 beträgt.

### Bezugszeichenliste

- 1: Portionskapsel
- 1.1: Bodenbereich
- 1.2: Seitenwand
- 1.3: Übergang Bodenbereich/Seitenwand, Sicke
- 1.4: Flansch
- 1.5: Ausbuchtung im Flansch, Siegelfläche
- 1.6: Ausnehmung
- 1.7: Raum
- 2: Filterelement, Filz, Vlies
- 3: Siegelwerkzeug
- 3.1: Siegelfläche
- 5: Übergangsbereich zwischen dem Boden 1.1 und der Seitenwand 1.2
- 6: Gegenhalter
- 7: Siegelnaht
- L1: äußerer Durchmesser der Siegelnaht
- L2: innerer Durchmesser der Siegelnaht
- L3: Durchmesser des Filterelements
- L4: Durchmesser des ebenen Teils des Bodens

## Patentansprüche

1. Portionskapsel (1) für die Herstellung eines Getränks mit einer Seitenwand (1.2) und einem Boden (1.1), die gemeinsam einen Raum (1.7) definieren, wobei innerhalb des Raums (1.7) ein Filterelement (2) mit einer im Wesentlichen kreisringförmigen Siegelnaht (7) an den Boden (1.1) oder an ein Trägerelement gesiegelt ist, wobei das Filterelement (2) ein Vlies umfasst, **dadurch gekennzeichnet, dass** der äußere Durchmesser (L1) der Siegelnaht 55 bis 75 Prozent des Durchmessers (L3) des Filterelements (2), wobei der äußere Durchmesser (L1) der Siegelnaht 60 bis 70 Prozent des Durchmessers (L3) des Filterelements (2) beträgt.

2. Portionskapsel (1) nach Anspruch 1, wobei der innere Durchmesser (L2) der Siegelnaht 45 bis 65 Prozent und vorzugsweééise 50 bis 60 Prozent des Durchmessers (L3) des Filterelements (2) beträgt.

3. Portionskapsel (1) nach einem der vorhergehenden Ansprüche, wobei der Durchmesser (L3) des Filterelements (2) zwischen 24 und 36 Millimeter und vorzugsweise zwischen 29 und 31 Millimeter liegt.

4. Portionskapsel (1) nach einem der vorhergehenden Ansprüche, wobei die Breite der vorzugsweise ununterbrochenen Siegelnaht 1 bis 1,5 Millimeter beträgt.

5. Portionskapsel (1) nach einem der vorhergehenden Ansprüche, wobei der Boden (1.1) einen im Wesentlichen ebenen Abschnitt aufweist, dessen äußerer Durchmesser (L4) 84 bis 94 Prozent des Durchmessers (L3) des Filterelements (2) beträgt.

6. Portionskapsel (1) nach einem der vorhergehenden Ansprüche, wobei der Boden (1.1) eine Ausnehmung aufweist, die so groß ist, dass beim Ausströmen des Getränks durch die Ausnehmung (1.6) im Wesentlichen kein Druckverlust entsteht.

7. Portionskapsel (1) nach einem der vorhergehenden Ansprüche, wobei der Durchmesser (L3) des Filterelements (2) 1 bis 5 Prozent kleiner als die Innenabmessung der Portionskapsel (1) auf Höhe des Bodens (1.1) ist.

8. Portionskapsel (1) nach einem der vorhergehenden Ansprüche, wobei das Filterelement (2) mehrlagig ausgebildet ist.

9. Portionskapsel (1) nach einem der vorhergehenden Ansprüche, wobei der maximale Durchmesser (L3) des Filterelements (2) größer als der Durchmesser des Bodes (1.1) ist.

10. Portionskapsel (1) nach einem der vorhergehenden Ansprüche, wobei wenigstens eine dem Raum zugewandten Seite des Vlies umfassenden Filterelements kalandriert, vorzugsweise punktkalandriert ist und/oder wobei wenigstens eine dem Raum abgewandte Seite des Vlies umfassenden Filterelements wärmebehandelt ist.

## Claims

1. Single-serve capsule (1) for producing a beverage, having a side wall (1.2) and a base (1.1) which together define a space (1.7), wherein, within the space (1.7), a filter element (2) is sealed to the base (1.1) or to a carrier element by a substantially annular sealing seam (7), wherein the filter element (2) comprises a nonwoven, **characterized in that** the outside diameter (L1) of the sealing seam is 55 to 75 percent of the diameter (L3) of the filter element (2), wherein the outside diameter (L1) of the sealing seam is 60 to 70 percent of the diameter (L3) of the filter element (2).

2. Single-serve capsule (1) according to claim 1, wherein the inside diameter (L2) of the sealing seam is 45 to 65 percent and preferably 50 to 60 percent of the diameter (L3) of the filter element (2) .

3. Single-serve capsule (1) according to one of the preceding claims, wherein the diameter (L3) of the filter element (2) is between 24 and 36 millimeters and preferably between 29 and 31 millimeters.

4. Single-serve capsule (1) according to one of the preceding claims, wherein the width of the preferably uninterrupted sealing seam is 1 to 1.5 millimeters.

5. Single-serve capsule (1) according to one of the preceding claims, wherein the base (1.1) has a substantially flat portion, the outside diameter (L4) of which is 84 to 94 percent of the diameter (L3) of the filter element (2).

6. Single-serve capsule (1) according to one of the preceding claims, wherein the base (1.1) has a clearance which is large enough that, when the beverage flows out through the clearance (1.6), substantially no pressure drop occurs.

7. Single-serve capsule (1) according to one of the preceding claims, wherein the diameter (L3) of the filter element (2) is 1 to 5 percent smaller than the internal dimension of the single-serve capsule (1) at the level of the base (1.1).

8. Single-serve capsule (1) according to one of the preceding claims, wherein the filter element (2) is formed in a multilayer manner.

9. Single-serve capsule (1) according to one of the preceding claims, wherein the maximum diameter (L3) of the filter element (2) is greater than the diameter of the base (1.1).

10. Single-serve capsule (1) according to one of the preceding claims, wherein at least one side, facing the space, of the filter element comprising nonwoven is calendered, preferably spot calendered, and/or wherein at least one side, facing away from the space, of the filter element comprising nonwoven is heat-treated.

## Revendications

1. Capsule dosette (1) pour la préparation d'une boisson, comprenant une paroi latérale (1.2) et un fond (1.1), qui définissent ensemble un espace (1.7), un élément de filtre (2) étant scellé à l'intérieur de l'espace (1.7) avec un cordon de scellage (7) de forme essentiellement annulaire circulaire au niveau du fond (1.1) ou au niveau d'un élément de support, l'élément de filtre (2) comprenant un non-tissé, **caractérisée en ce que** le diamètre extérieur (L1) du cordon de scellage représente 55 à 75 % du diamètre (L3) de l'élément de filtre (2), dans laquelle le diamètre extérieur (L1) du cordon de scellage représente 60 à 70 % du diamètre (L3) de l'élément de filtre (2).

2. Capsule dosette (1) selon la revendication 1, dans laquelle le diamètre intérieur (L2) du cordon de scellage représente 45 à 65 % et de préférence 50 à 60 % du diamètre (L3) de l'élément de filtre (2) .

3. Capsule dosette (1) selon l'une quelconque des revendications précédentes, dans laquelle le diamètre (L3) de l'élément de filtre (2) est compris entre 24 et 36 millimètres et de préférence entre 29 et 31 millimètres.

4. Capsule dosette (1) selon l'une quelconque des revendications précédentes, dans laquelle la largeur du cordon de scellage de préférence ininterrompu vaut 1 à 1,5 millimètres.

5. Capsule dosette (1) selon l'une quelconque des revendications précédentes, dans laquelle le fond (1.1) présente une portion essentiellement plane dont le diamètre extérieur (L4) représente 84 à 94 % du diamètre (L3) de l'élément de filtre (2).

6. Capsule dosette (1) selon l'une quelconque des revendications précédentes, dans laquelle le fond (1.1) présente un évidement qui est suffisamment grand pour qu'il ne se produise sensiblement aucune perte de pression lors de l'écoulement de la boisson à travers l'évidement (1.6).

7. Capsule dosette (1) selon l'une quelconque des revendications précédentes, dans laquelle le diamètre (L3) de l'élément de filtre (2) est de 1 à 5 pour cent plus petit que la dimension intérieure de la capsule dosette (1) à la hauteur du fond (1.1).

8. Capsule dosette (1) selon l'une quelconque des revendications précédentes, dans laquelle l'élément de filtre (2) est réalisé en plusieurs couches.

9. Capsule dosette (1) selon l'une quelconque des revendications précédentes, dans laquelle le diamètre maximal (L3) de l'élément de filtre (2) est supérieur au diamètre du fond (1.1).

10. Capsule dosette (1) selon l'une quelconque des revendications précédentes, dans laquelle au moins un côté de l'élément de filtre comprenant le non-tissé, tourné vers l'espace, est calandré, de préférence est calandrée ponctuellement et/ou dans laquelle au moins un côté de l'élément de filtre comprenant le non-tissé, opposé à l'espace, est soumis à un traitement thermique.
